# EUROPEAN PATENT APPLICATION

(11) **EP 2 385 260 A1**
(43) Date of publication of application: **09.11.2011**
(21) Application number: 11164628.7
(22) Date of filing: 03.05.2011
(51) Int. Cl.: F16B 5/02, F16B 41/00

(54) **Capitive fixing system**

(30) Priority: 04.05.2010 GB 1007445
(71) Applicant: Cummins Power Generation Limited, Ramsgate, Kent CT12 5BF (GB)
(72) Inventor: Parry, Vincent, Ramsgate, Kent CT12 5BF (GB)
(74) Representative: Williams, Michael Ian

(57) **Abstract**

A captive fixing system is disclosed for releasably securing first and second panels (18, 32) together. The system comprises a retainer (2) comprising a body (4) having a mounting portion (10) defining an opening (8), the mounting portion (10) being arranged for fixing the retainer to the first panel (18) with the opening (8) around an aperture (20), and an engaging portion (14) comprising an internally threaded surface (16). A bolt (22) comprising a threaded portion (24) is threadably engagable with the engaging portion (14) of the retainer (2) for releasably holding the first and second panels together. The engaging portion (14) of the retainer is spaced away from the opening (8) so as to provide a space (6) within the body arranged to be sufficient substantially to contain the threaded portion (14) of the bolt (22). All parts of the fixing system can remain captive on removal of the second panel from the first panel. The captive fixing system can be used for removably securing a guard to a machine.

## Description

This invention relates to a captive fixing system for retaining the components of a bolted joint, such as a joint for securing two panels together. The invention has particular application in securing guards for machinery, such as guards for generator sets.

Applications exist where it is required to fix various parts of a machine together in a secure manner. A machine that comprises a hazardous part, for example a moving part of a generator, may include a protective guard securely fixed to the machine for safety reasons. The guard is generally fixed to a mounting panel of the machine by several bolted joints around the perimeter of the guard. A bolted joint comprises a bolt on one side of the joint protruding through an aperture in each of a first and second panel to be joined together, and engaging the screw thread of a nut on the other side of the joint. When access to the hazardous part is required, for example during servicing, the guard may be removed by releasing all of the joints fixing the guard to the machine by unscrewing the bolts from the associated nuts.

It is known to secure a guard to a machine using stepped bolts with lock washers. The stepped bolt and lock washer prevent the bolt from falling out of the aperture in the guard when the bolt is not attached to the nut. However, the nut itself is loose with the result that it may be mislaid, or fall into the machine. The latter may cause a safety concern whilst the former sometimes leads to the replacement of the guard with fewer of the bolts being properly secured. This may also be a safety concern.

If the nut is simply secured around the aperture in the second panel, all of the bolts would need to be undone simultaneously, since unscrewing a bolt would tend to force the panels apart. Such an arrangement would not suit the tolerance levels generally present in guards for machines, and would make it difficult to assemble panels with non-parallel faces.

This invention aims to provide a captive fixing system for a bolted joint in which both the nut and bolt may be retained.

According to one aspect of the present invention there is provided a captive fixing system for releasably securing first and second panels together, the system comprising:
a retainer, the retainer comprising a body having a mounting portion defining an opening, the mounting portion being arranged for fixing the retainer to the first panel with the opening around an aperture, and an engaging portion comprising an internally threaded surface for engaging with a threaded portion of a bolt, and
a bolt comprising a threaded portion which is threadably engagable with the engaging portion of the retainer for releasably holding the first and second panels together,
wherein the engaging portion of the retainer is spaced away from the opening so as to provide a space within the body arranged to be sufficient substantially to contain the threaded portion of the bolt.

Thus the retainer may provide the nut part of the bolted joint, which may be secured to the panel, and the bolt may be unscrewed from the engaging portion so as to undo the joint, with the screw threaded or stepped portion being retracted into the body. When the panels are taken apart, the retainer may remain fixed to the panel so that there are no loose parts of the joint.

Thus the present invention may provide the advantage that all parts of the fixing system can remain captive on removal of the second panel from the first panel. The present invention may also allow individual bolts to be tightened or loosed separately. The present invention may also ease assembly of panels where exact alignment is difficult, or with non-parallel faces.

Preferably the bolt further comprises a non-threaded shank. The non-threaded shank may extend through an aperture in the second panel, and may allow movement of the bolt forwards and backwards through the aperture along the length of the shank. This may allow the bolt to be tightened or loosed while the two panels remain in contact.

The bolt is preferably a stepped bolt, and the threaded portion may be of greater diameter than the non-threaded shank. This can allow the bolt to be retained within the panel even when the bolt is unscrewed.

Preferably the system further comprises retaining means for retaining the bolt within an aperture in the second panel. The retaining means may comprise, for example, a retaining washer such as a lock washer, a retaining clip such as a circlip, or any other device which allows the bolt to be retained in the aperture. Alternatively, the aperture may be a key hole aperture in order to retain the bolt.

The engaging portion may be formed integrally with the retainer such that the retainer is of a one piece construction. The opening may be substantially circular in shape.

The mounting portion may comprise at least one tab arranged to abut a panel, the or each tab extending away from the opening in the body. For example, the mounting portion may comprise two tabs, extending in opposite directions from the body. The tabs allow the retainer to be mounted securely to a panel, for example by welding, and arranging the tabs on opposite sides of the retainer has the benefit of keeping the retainer securely mounted on the application of a torque to the retainer, such as when tightening a bolt.

The retainer body may be substantially circular in cross-section, the inner diameter of the space for the bolt being larger than the inner diameter of the engaging portion. This provides a clearance space within the body for the screw threaded or stepped portion of the bolt.

The body may substantially enclose the space, such that debris or other material may be prevented from entering the body. The retainer may be unitarily formed from metal such as steel, allowing the manufacture of the retainer in an efficient manner, for example by die casting or machining. In some circumstances other materials such as high strength plastics may be used instead.

The body may be substantially cylindrical in shape in the region between the opening and the engaging portion. This allows for an efficient construction of the retainer.

According to another aspect of the invention there is provided an assembly comprising a first panel, a second panel, and a captive fixing system in any of the forms described above for releasably securing the first and second panels together.

The first panel may comprise a first aperture, and the retainer may be mounted on the first panel about the first aperture. The second panel may comprise a second aperture, and the bolt may be mounted through the second aperture. The second aperture may be a slotted hole. This enables some adjustability in the relative positions of the panels which may be required by manufacturing tolerances.

Preferably a plurality of captive fixing systems is provided, in order to allow the second panel to be secured in a plurality of locations. The second panel may therefore comprise a plurality of second apertures. Each of the retainers may be fixed to the same first panel, or to different first panels.

The first panel may be part of a machine and the second panel may be part of a component that is removable from the machine. For example, the component may be a guard for a part of a machine, such as a hazardous part. Hence a guard can easily and safely be attached to and removed from a machine. The machine may be, for example, a generator set comprising an engine and an electrical generator.

According to another aspect of the invention there is provided a machine comprising a guard and a captive fixing system or assembly in any of the forms described above for releasably securing the guard to the machine.

According to another aspect of the invention there is provided a method of releasably securing first and second panels together, the method comprising the steps of:
mounting a retainer to the first panel about a first aperture therein, the retainer having a mounting portion defining an opening for fixing the retainer to the first panel, and an engaging portion for engaging with a threaded portion of a bolt;
mounting a bolt through a second aperture in the second panel,
aligning the second aperture with the first aperture; and
threadably engaging the bolt with the engaging portion of the retainer for releasably holding the first and second panels together,
wherein the engaging portion of the retainer is spaced away from the opening so as to provide a space within the body of the retainer, and the threaded portion of the bolt is substantially contained within the space when the panels are in contact and the bolt is not engaged with the engaging portion of the retainer.

According to another aspect of the present invention there is provided a joint comprising a retainer as defined above, a stepped bolt, a lock washer, a first panel comprising a first aperture, and a second panel comprising a second aperture, wherein the retainer is mounted on the first panel about the first aperture, the stepped bolt is mounted through the second aperture and the lock washer, the bolt being threadably engagable with the engaging portion of the retainer for releasably holding the first and second panels together. Such a joint allows panels to be securely attached together and allows the retention of the parts when the joint is undone.

According to another aspect of the invention there is provided a method of constructing a joint comprising the steps of mounting a retainer as defined above to a first panel about a first aperture therein, mounting a stepped bolt through a second aperture in a second panel, and a lock washer, aligning the second aperture with the first aperture and threadably engaging the stepped bolt with the engaging portion of the retainer for releasably holding the first and second panels together. Having the retainer pre-aligned with the first aperture allows simple assembly of a joint.

Preferred embodiments of the invention will now be described, purely by way of example, with reference to the accompanying drawings, in which:
Figure 1 is an exploded perspective view of part of a bolted joint comprising a retainer according to one embodiment of the present invention;
Figure 2 is an exploded perspective view of another part of the bolted joint shown in Figure 1; and
Figures 3, 4 and 5 are schematic cross-sectional views of the bolted joint of Figures 1 and 2 in different positions.

Machines such as a generator sets often have protective guards to prevent access to moving parts or other hazardous areas of the machine. Where access to the machine is required, for example for servicing, it may be necessary to remove the guard. In order to allow removal, the guard may be attached to the machine at various locations using bolted joints.

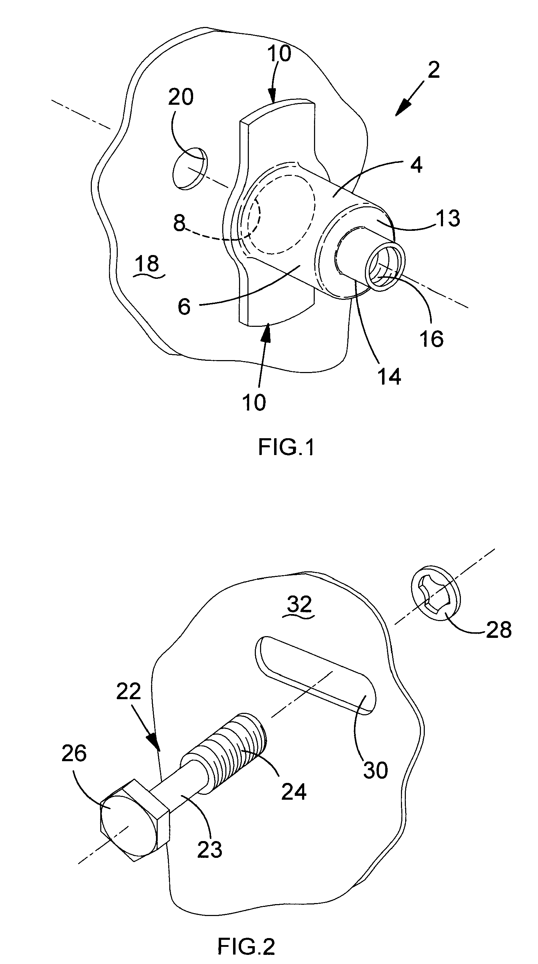

Referring to Figure 1, a retainer 2 for a bolted joint comprises a substantially cylindrical main body portion 4 providing an interior space 6. At one end of the body 4 there is a mounting portion comprising a substantially circular opening 8 with two opposed platelike tabs 10 which extend away from the opening 8 in a direction perpendicular to the axis of the body 4. At the other end of the body 4 there is an engaging portion 14 comprising a portion of reduced diameter having an internally threaded surface 16. A perpendicularly extending shoulder 13 joins the main body portion 4 to the engaging portion 14. The length of the main body portion 4 is chosen to be sufficient for a threaded portion of a bolt to be contained in the space 6.

In use, the retainer 2 is mounted with the opening 8 around a circular aperture 20 in one of the components to be joined, for example a mounting panel 18. The retainer 2 may be fixed to the panel 18 by attaching the tabs 10 to the panel, for example by welding. When so mounted, the retainer 2 and first panel 18 comprise a first part of a bolted joint 34.

Referring also to Figure 2, a complementary second part of the bolted joint 34 may comprise a stepped bolt 22, which has a head 26, a shank 23 and a threaded portion 24 of greater diameter than the shank 23. The threaded portion 24 is of a size suitable to be engagable with the internally threaded surface 16 of the retainer engaging portion 14. The stepped bolt 22 extends through a slotted aperture 30 in the second component to be joined, for example a second panel 32 which may be part of a guard for a machine, and then through a lock washer or circlip 28 on the other side of the panel 32. The lock washer or circlip 28 restricts the removal of the stepped bolt 22 from the slotted aperture 30 in a known manner. Thus the stepped bolt 22 is retained in the second panel 32 even when loose.

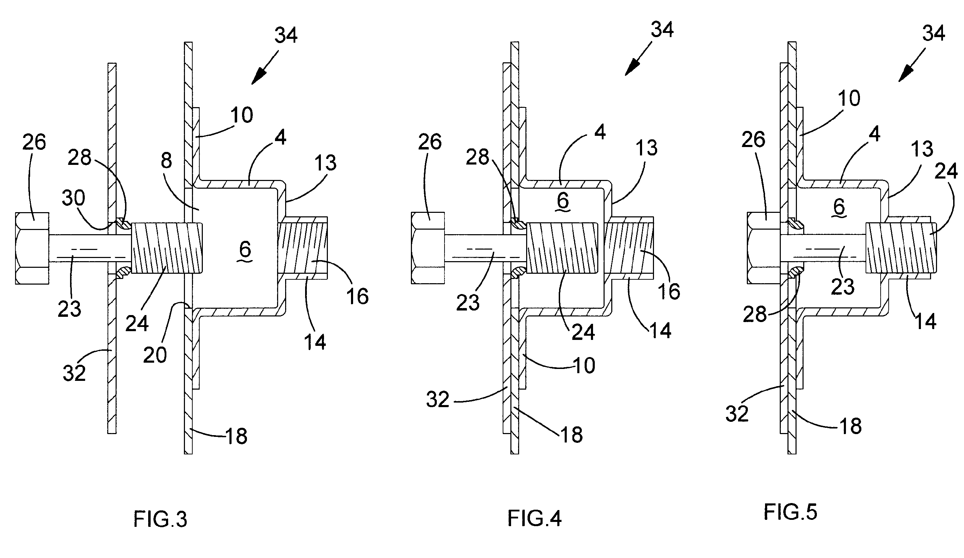

To assemble the bolted joint 34, the first panel 18 with the retainer 2 mounted thereon and the second panel 32 with the stepped bolt 22 extending therethrough are brought together. The threaded portion 24 of the stepped bolt 22 is passed through the circular aperture 20 in the first panel 18 and thus through the opening 8 of the retainer 2 and into the space 6, as shown in Figure 3.

Referring now to Figure 4, it can be seen that the engaging portion 14 of the body 4 is spaced away from the opening 8 by a distance at least corresponding to the length of the threaded portion 24 of the stepped bolt 22. Hence, with the panels in position for assembly, i.e. when the first panel 18 and second panel 32 are abutting each other, the threaded portion 24 of the stepped bolt 22 is contained within the space 6 enclosed by the retainer body 4. The larger diameter of the body 4 compared to the engaging portion 14 provides a clearance around the stepped bolt 22.

The bolted joint 34 is tightened by moving the stepped bolt 22 further into the retainer body 4 and threadably engaging the threaded portion 24 of the stepped bolt 22 with the internally threaded surface 16 of the body 4, as shown in Figure 5. When the joint is to be undone, for example to remove a guard from a machine, the bolt can be freed from the thread 16 of the retainer 2 whilst the first panel 18 and second panel 32 remain in an assembled position, as shown in Figure 4. Thus, where there are several such joints, each may be fully undone before removing the panel.

## Claims

1. A captive fixing system for releasably securing first and second panels (18, 32) together, the system comprising:
a retainer (2), the retainer comprising a body (4) having a mounting portion (10) defining an opening (8), the mounting portion (10) being arranged for fixing the retainer to the first panel (18) with the opening (8) around an aperture (20), and an engaging portion (14) comprising an internally threaded surface (16) for engaging with a threaded portion (24) of a bolt (22), and
a bolt (22) comprising a threaded portion (24) which is threadably engagable with the engaging portion (14) of the retainer (2) for releasably holding the first and second panels together,
wherein the engaging portion (14) of the retainer is spaced away from the opening (8) so as to provide a space (6) within the body arranged to be sufficient substantially to contain the threaded portion (14) of the bolt (22).

2. A system according to claim 1, wherein the bolt (22) further comprises a non-threaded shank (23).

3. A system according to claim 2, wherein the bolt (22) is a stepped bolt and the threaded portion (24) is of greater diameter than the non-threaded shank (23).

4. A system according to any of the preceding claims, further comprising retaining means (28) for retaining the bolt (22) within an aperture (30) in the second panel (32).

5. A system according to any of the preceding claims, wherein the engaging portion (14) of the retainer (2) is formed integrally with the retainer such that the retainer is of a one piece construction.

6. A system according to any of the preceding claims, wherein the mounting portion (10) of the retainer comprises at least one tab arranged to abut a panel, the or each tab extending away from the opening (8) in the body.

7. A system according to any of the preceding claims, wherein the retainer body is substantially circular in cross-section, the inner diameter of the space (6) for the bolt being larger than the inner diameter of the engaging portion (14).

8. A system according to any of the preceding claims, wherein the body (4) of the retainer substantially encloses the space (6).

9. An assembly comprising a first panel (18), a second panel (32), and a captive fixing system according to any of the preceding claims for releasably securing the first and second panels together.

10. An assembly according to claim 9, wherein the first panel (18) comprises a first aperture (20), and the retainer (2) is mounted on the first panel (18) about the first aperture (20).

11. An assembly according to claim 9 or 10, wherein the second panel (32) comprises a second aperture (30), and the bolt (22) is mounted through the second aperture (30).

12. An assembly according to claim 11, wherein the second aperture (30) is a slotted hole.

13. An assembly according to any of claims 9 to 12, wherein the first panel (18) is part of a machine and the second panel (32) is part of a component that is removable from the machine.

14. A machine comprising a guard and a captive fixing system or assembly according to any of the preceding claims for releasably securing the guard to the machine.

15. A method of releasably securing first and second panels together, the method comprising the steps of:
mounting a retainer (2) to the first panel (18) about a first aperture (20) therein, the retainer having a mounting portion (10) defining an opening (8) for fixing the retainer to the first panel (18), and an engaging portion (14) for engaging with a threaded portion (24) of a bolt (22);
mounting a bolt (22) through a second aperture (30) in the second panel (32),
aligning the second aperture (30) with the first aperture (2); and
threadably engaging the bolt (22) with the engaging portion (14) of the retainer for releasably holding the first and second panels together,
wherein the engaging portion (14) of the retainer is spaced away from the opening (8) so as to provide a space (6) within the body of the retainer, and the threaded portion (14) of the bolt (22) is substantially contained within the space (6) when the panels are in contact and the bolt (22) is not engaged with the engaging portion (14) of the retainer.
